# EUROPÄISCHE PATENTSCHRIFT

(11) **EP 3 540 218 B1**
(45) Veröffentlichungstag und Bekanntmachung des Hinweises auf die Patenterteilung: **28.10.2020**
(21) Anmeldenummer: 18161416.5
(22) Anmeldetag: 13.03.2018
(51) Int. Cl.: F03D 80/80

(54) **MASCHINENTRÄGER FÜR EINE WINDENERGIEANLAGE**
MACHINE HOLDER FOR A WIND ENERGY FACILITY
SUPPORT DE MACHINE POUR UNE ÉOLIENNE

(43) Veröffentlichungstag der Anmeldung: 18.09.2019
(73) Patentinhaber: Nordex Energy GmbH, 22419 Hamburg (DE)
(72) Erfinder: Muhamad, Ibrahim, 18057 Rostock (DE); Tönissen, Nils, 18059 Rostock (DE); Wackrow, Torsten, 18119 Rostock (DE)
(74) Vertreter: Garrels, Sabine

(56) Entgegenhaltungen:
- EP-A1- 2 740 928
- EP-A1- 2 740 932
- EP-A2- 2 693 048
- WO-A1-2018/037276
- US-A1- 2012 025 538
- US-A1- 2012 205 915

## Beschreibung

Die Erfindung betrifft die Tragstruktur einer Windenergieanlage, insbesondere einen Maschinenträger für die Windenergieanlage.

Eine Windenergieanlage besteht üblicherweise aus einem Turm und einer um die Längsachse des Turms drehbar auf dem Turmkopf gelagerten Gondel. Die Gondel trägt den Rotor mit einer Rotornabe und mindestens einem Rotorblatt sowie einen Generator, der die von dem Rotor aus dem Wind entnommene Energie in elektrische Energie umwandelt.

Die Gondel einer Windenergieanlage umfasst eine Tragstruktur sowie eine nichttragende Gondelverkleidung mit einem Tragwerk, bestehend aus Streben und Profilen. Im Innern der Gondel sind auf der Tragstruktur verschiedene Anlagenkomponenten angeordnet. Die Tragstruktur umfasst üblicherweise einen Maschinenträger aus Guss und einen Generatorträger als Schweißkonstruktion. Die Gondelverkleidung schützt die Komponenten im Inneren der Gondel gegen äußere Umwelteinflüsse. Für Windenergieanlagen und deren Einsatzbedingungen ist die Stabilität der Gondel von besonderer Bedeutung. Insbesondere ist der Teil der Gondel Gegenstand der Erfindung, der als Maschinenträger ausgebildet ist.

Da der Maschinenträger in der Regel aus einem Metallguss besteht und nicht aus Einzelteilen zusammengesetzt ist, wird die Kontur und die nötige Versteifung des Maschinenträgers bei der Neuentwicklung einer Windenergieanlage entsprechend den Betriebs- und Extremlasten neu berechnet und entwickelt. Des Weiteren hängt das Design des Maschinenträgers von notwendigen Halte- und Aufnahmefunktionen, wie z.B. das Tragen des Triebstranges ab. Ein weiterer wichtiger Punkt des Designs des Maschinenträgers ist die notwendige Steifigkeit, die der Maschinenträger mit sich bringen muss, um beispielsweise eine zu starke Auslenkung des Triebstranges zu verhindern.

EP2693048A2 offenbart einen Maschinenträger mit einem Stützrahmen, wobei in dem Stützrahmen eine Kreuzstruktur unterhalb der Rotorwelle angeordnet ist. Die Kreuzstruktur umfasst einen oder mehrere Arme.

US 2012/205915 A1 beschreibt eine Windkraftanlage, die einen Maschinenrahmen umfasst. Die Rotorwelle wird von einer Basis des Maschinenrahmens getragen, um eine erhöhte Steifigkeit und Sicherheit im Betrieb zu gewährleisten. Die Windkraftanlage umfasst ferner ein Versteifungselement, das die Basis versteift und sich von der Basis über die Rotorwelle erstreckt, um einen oberen Teil der Rotorwelle zumindest teilweise abzudecken.

Sowohl EP 2740928 A1 als auch EP 2740932 A1 beschreiben einen Maschinenträger, welcher Durchbrechungen in dem Maschinenträger erkennen lässt. Die Durchbrechungen geben den Zugang zu dem Inneren des Maschinenträgers frei, ohne seine Steifigkeit bedeutend zu schwächen. Um angreifende Kräfte besser aufnehmen zu können, ist der Maschinenträger nicht als eine Plattform ausgebildet, sondern besitzt eine annähernd geschlossene Struktur mit den einzelnen Durchbrechungen.

In WO 2018/037276 A1 wird eine selbsttragende Gondelstruktur für Windkraftanlagen offenbart, welche eine rohrförmige äußere Metallschale umfasst. Ein innerer Metallrahmen ist an der Schale befestigt und weist eine Vielzahl von Querrippen und eine Vielzahl von Längsrippen zum Verbinden der Querrippen miteinander auf.

### Darstellung der Erfindung

Aufgabe der Erfindung ist es, eine ideale Last- und Steifigkeitsverteilung des Maschinenträgers mit geringstmöglichem Materialeinsatz zu entwickeln. Der Maschinenträger soll den Anforderungen bezüglich der Betriebs- und Extremlasten und der Steifigkeit unter den gegebenen Platzverhältnissen im Innern der Gondel optimal gerecht werden.

Die Lösung der Aufgabe erfolgt durch die in den Ansprüchen angegebenen Merkmale.

Der erfindungsgemäße Maschinenträger für eine Windenergieanlage hat eine Oberseite, eine Unterseite, eine Frontseite und eine Rückseite und umfasst eine umlaufende ringförmige Wandung zwischen der Unterseite und der Oberseite. Der Maschinenträger umfasst weiterhin zwei Seitenabschnitte der Wandung, welche sich zwischen der Frontseite und der Rückseite des Maschinenträgers erstrecken. Weiterhin werden zwei seitliche Flansche auf der Oberseite des Maschinenträgers umfasst, wobei innerhalb der Wandung mehrere Arme angeordnet sind. Die Arme sind mit der Wandung über ein Kastenprofil verbunden.

Erfindungswesentlich ist, dass wenigstens vier Arme angeordnet sind, wobei zwei Arme als symmetrisches Paar an der Rückseite des Maschinenträgers unter einem Winkel V mit dem Kastenprofil und der Wandung, beispielsweise an den Seitenabschnitten, verbunden sind, und jeweils zwei Arme als symmetrisches Paar an der Frontseite des Maschinenträgers unter einem Winkel U mit dem Kastenprofil und der Wandung verbunden sind.

In einer wesentlichen Ausführung enden die Arme direkt an der Frontseite der Wandung oder die Arme sind über die Wandung hinaus verlängert und enden an den Flanschen.

In einer weiteren wesentlichen Ausführung weisen die Arme jeweils einen Kragen auf, welcher nach innen, außen oder beidseitig auf der Oberseite oder der Unterseite an den Armen angeformt ist.

In einer weiteren wesentlichen Ausführung richtet sich der Winkel V und der Winkel U zwischen den Armen nach der Länge und Breite des Maschinenträgers.

In einer weiteren wesentlichen Ausführung ist das Kastenprofil mittig zum Maschinenträger, bevorzugt in seinem Zentrum, angeordnet.

Das Kastenprofil weist eine rechteckige oder trapezförmige Form auf, wobei das Trapez zur Rückseite oder zur Frontseite des Maschinenträgers zulaufend ausgebildet sein kann.

In einer wesentlichen Ausführung des Kastenprofils ist dieses als offene oder geschlossene Konstruktion ausgeführt und weist zwei gleichlange Schenkel auf, welche an ihrem ersten, zur Rückseite des Maschinenträgers weisenden Ende mit einer Grundseite und an ihrem zweiten, zur Frontseite des Maschinenträgers weisenden Ende mit einer Grundseite verbunden sind. Die Schenkel und die Grundseiten weisen jeweils eine Länge auf, die an den Maschinenträger bezüglich von Lastaufnahme und Steifigkeit, Breite und Länge angepasst ist.

In einer weiteren wesentlichen Ausführung sind die Grundseiten gleich lang oder jeweils eine der Grundseiten ist kürzer als die andere.

In einer weiteren wesentlichen Ausführung weist das Kastenprofil im Inneren zwischen den Schenkeln und den Grundseiten weitere Unterteilungen durch quer und/oder längs stehende Wände auf.

In einer wesentlichen Ausführung hat die Unterseite des Maschinenträgers eine kreisförmige, teilweise geschlossene Kontur, welche in Richtung Oberseite kugelförmig gewölbt ist.

In einer weiteren wesentlichen Ausführung ist in die Oberseite der ringförmigen Wandung an der Frontseite und der Rückseite jeweils ein elliptischer Ausschnitt eingebracht.

In einer weiteren wesentlichen Ausführung ist die Oberseite des Maschinenträgers mit einer konkaven Wölbung in Längsrichtung versehen, wobei die Wölbung das Design sowohl des Kastenprofils als auch der Arme mit ihren angeformten Kragen bestimmt.

Der Maschinenträger kann mittels Schweißen oder Gießen hergestellt werden.

Ein Vorteil der Erfindung ist es, dass die Wahl des Herstellungsverfahrens vom idealen Design losgelöst ist. Das beschriebene Design kann sowohl als Gussteil als auch mittels einer Schweißkonstruktion realisiert werden.

### Ausführung der Erfindung

Die Erfindung wird anhand von Zeichnungen näher erläutert. Hierzu zeigen
- Figur 1: einen Maschinenträger mit einer Rotorwelle und einem Getriebe,
- Figur 2: den Maschinenträger in einer Draufsicht,
- Figur 3: einen Teil-Schnitt E-E durch den Maschinenträger aus Figur 2,
- Figur 4: einen Schnitt Z-Z durch den Maschinenträger aus Figur 3
- Figur 5: einen Ausschnitt A von der Mitte des Maschinenträgers,
- Figur 6: eine Ansicht von unten auf den erfindungsgemäßen Maschinenträger, und
- Figur 7: eine weitere Ausführung des Maschinenträgers in der Draufsicht.

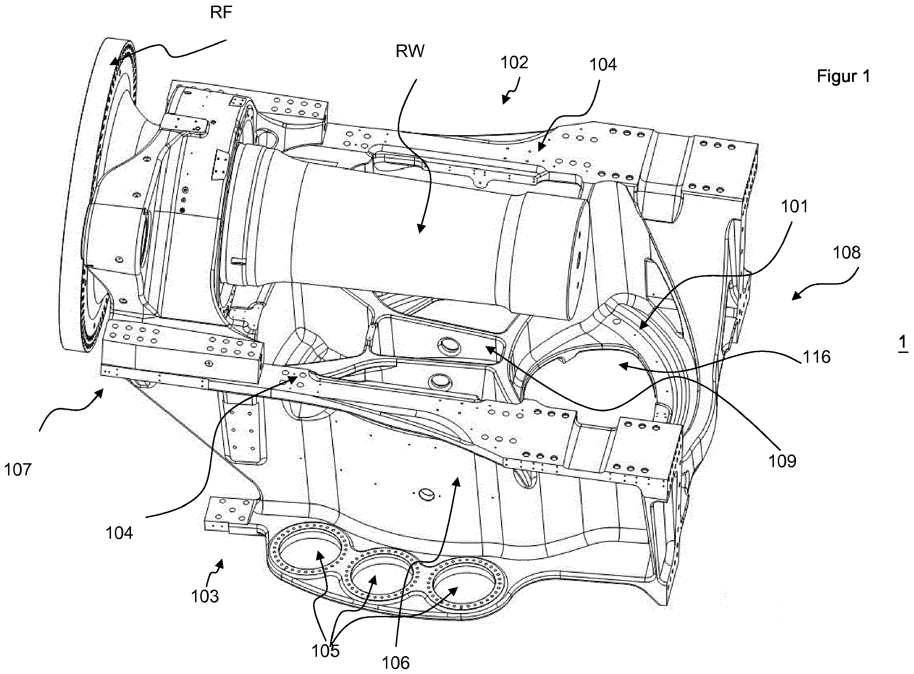

In Figur 1 wird eine perspektivische Ansicht des erfindungsgemäßen Maschinenträgers 1 einer Windenergieanlage mit einer Rotorwelle RW und Öffnungen 105 für Azimutantriebe gezeigt. Die Rotorwelle RW ist auf dem Maschinenträger 1 gelagert. Die Rotorwelle RW weist an der Frontseite 107 einen Rotorflansch RF auf, der mit einer Rotornabe (nicht dargestellt) verbunden werden kann.

Der Maschinenträger 1 weist grundsätzlich eine wannenförmige Struktur mit einer Oberseite 102, einer Unterseite 103, einer Frontseite 107 und einer Rückseite 108 auf. Die Frontseite 107 und die Rückseite 108 liegen in Richtung der Achse der Rotorwelle RW, wobei die Frontseite 107 in Richtung der Rotornabe (nicht dargestellt) und die Rückseite 108 in Richtung des Generatorträgers (nicht dargestellt) zeigt. An der Unterseite 103 hat der Maschinenträger 1 eine kreisförmige, teilweise geschlossene Kontur, welche außerdem kugelförmig nach oben gewölbt ist. An die Unterseite 103 ist in Richtung Oberseite 102 weisend eine umlaufende ringförmige Wandung 101 angeformt. Die Wandung 101 ist an der Frontseite 107 und an der Rückseite 108 des Maschinenträgers 1 mit jeweils einem elliptischen Ausschnitt versehen. Die Wandung 101 erstreckt sich jeweils seitlich von den elliptischen Ausschnitten zur Oberseite 102 hin, wobei diese Abschnitte der Wandung 101 im Weiteren als Seitenabschnitte 106 bezeichnet werden sollen. Die Seitenabschnitte 106 sind auf der Oberseite 102 mit Flanschen 104 versehen, welche sich zwischen der Frontseite 107 und der Rückseite 108 längs des Maschinenträgers 1 zur Unterseite 103 hin erstrecken. Die Flansche 104 dienen als Auflageflächen für Rotorlagergehäuse (nicht dargestellt) und das Getriebeauflager (nicht dargestellt). An der Unterseite 103 des Maschinenträgers 1 sind nach außen gerichtet beidseitig unterhalb der Flansche 104 runde Öffnungen 105 angeordnet, welche der Aufnahme der Azimutantriebe (nicht dargestellt) dienen, wobei in jeder Öffnung 105 ein Azimutantrieb gelagert ist.

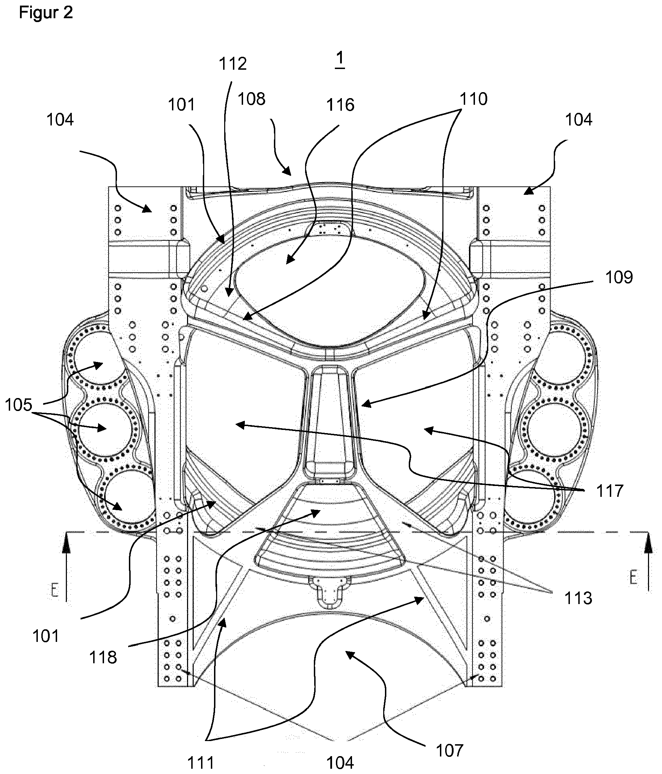

Figur 2 zeigt den Maschinenträger 1 in einer Draufsicht. Zu sehen ist der Maschinenträger 1, die an der Unterseite 103 des Maschinenträgers 1 beidseitig angeordneten runden Öffnungen 105 für die Azimutantriebe und die an der Oberseite 102 angeordneten beidseitigen, im Wesentlichen parallelen Flansche 104. In dem vorliegenden Ausführungsbeispiel nach Figur 2 sind jeweils drei Öffnungen 105 zu sehen. Die Anzahl der Öffnungen 105 richtet sich nach der Dimensionierung des Azimutantriebssystems und der daraus resultierenden Anzahl der Azimutantriebe.

In der Mitte des Maschinenträgers 1, ungefähr in seinem Zentrum 10 ist ein trapezförmiges oder rechteckiges nach oben oder unten offenes Kastenprofil 109 angeordnet. Es ist nicht zwangsläufig erforderlich, dass sich das Kastenprofil 109 im Zentrum 10 des Maschinenträgers 1 befindet. Das Kastenprofil 109 kann sowohl innerhalb als auch außerhalb des Zentrums 10 des Maschinenträgers 1 angeordnet sein. Das Kastenprofil 109 befindet sich unterhalb der Rotorwelle RW. Das Kastenprofil 109 kann je nach Notwendigkeit bezüglich Lasten und Steifigkeit, Breite und Länge des Maschinenträgers 1 in seiner Schenkellänge (W, X, Y) variieren. Daher ist das Kastenprofil 109 je nach Notwendigkeit rechteckig oder trapezförmig in Richtung Frontseite 107 oder in Richtung Rückseite 108 zulaufend.

Vier Arme 110 und 111 verbinden, jeweils von einer Ecke des Kastenprofils 109 ausgehend, das Kastenprofil 109 mit der Wandung 101 des Maschinenträgers 1. Die Arme 110, 111 haben keine direkte Verbindung untereinander. Jeweils zwei Arme 110 und 111 sind als symmetrisches Paar ausgebildet. Die Arme 110 sind zur Rückseite 108 des Maschinenträgers 1 gerichtet angeordnet und verlaufen in einem Winkel V von dem Kastenprofil 109 ausgehend in die hinteren Seitenabschnitte 106 der Wandung 101. Der Winkel V variiert je nach Länge und Breite des Maschinenträgers 1. Die Arme 111 sind, ebenfalls als symmetrisches Paar ausgebildet, mit der Wandung 101 im Bereich der Frontseite 107 des Maschinenträgers 1 verbunden und verlaufen in einem optimierten Winkel U von dem Kastenprofil 109 ausgehend zur Wandung 101 der Frontseite 107. In dem vorliegenden Ausführungsbeispiel sind die Arme 111 über die Wandung 101 der Frontseite 107 hinaus verlängert und enden an den Flanschen 104 des Rotorlagergehäuses, wodurch die Flansche 104 zusätzlich gestützt werden. Bei einem kleineren Maschinenträger 1 oder kürzeren Flanschen 104 können die Arme 111 auch direkt an der Wandung 101 der Frontseite 107 enden. Da das Kastenprofil 109 sich unterhalb der Rotorwelle RW befindet, und die Arme 110, 111 mit der Wandung 101 verbunden sind, folgt die Form der Arme 110, 111 der Kontur der Rotorwelle RW, so dass die Arme 110, 111 auf ihrer Oberseite einen gerundeten Einschnitt aufweisen.

Wie aus der Figur 2 ebenfalls ersichtlich, ist an den Armen 111 jeweils ein nach außen gespreizter Kragen 113 angeformt. Ebenso ist zu sehen, dass die Arme 110 jeweils einen nach innen laufenden Kragen 112 aufweisen. Diese angeformten Kragen 112, 113 können zur Oberseite 102 oder zur Unterseite 103 des Maschinenträgers 1 gerichtet, innen, außen oder beidseitig an den Armen 110, 111 angeformt sein. Auch können die Arme 110, 111 völlig ohne Kragen 112, 113 ausgeführt sein. Die Maximalvariante besteht somit darin, dass alle Arme 110, 111 mit beidseitigem Kragen 112, 113 sowohl zur Oberseite 102 als auch zur Unterseite 103 des Maschinenträgers 1 gerichtet, ausgeführt sind.

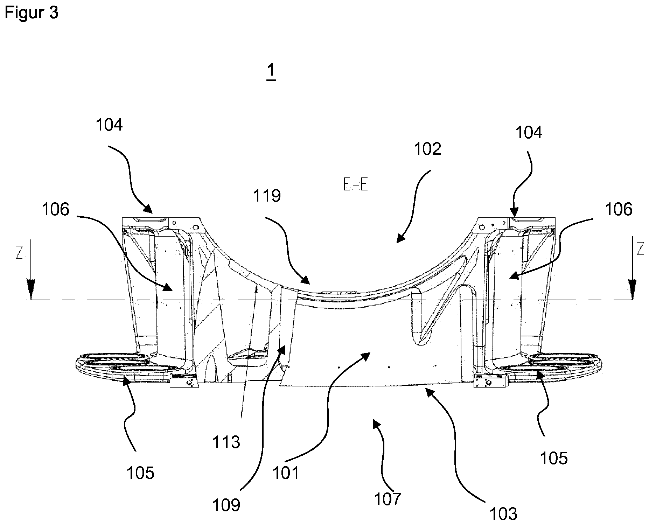

In Figur 3 ist ein Teil-Schnitt E-E durch den Maschinenträger 1 aus Figur 2 dargestellt. Der Teil-Schnitt E-E verläuft durch die Arme 111 an der Frontseite 107 des Maschinenträgers 1, wobei die Wandung 101, die Arme 111 mit ihrem angeformten Kragen 113, die Flansche 104, die Seitenabschnitte 106 und die Öffnungen 105 für die Azimutantriebe zu sehen sind. Durch die Figur 3 wird außerdem deutlich, dass die Oberseite 102 des Maschinenträgers 1 mit einer konkaven Wölbung 119 in Richtung der Achse der Rotorwelle RW versehen ist, wobei die Wölbung 119 das Design sowohl des Kastenprofils 109 als auch der Arme 110, 111 mit ihren angeformten Kragen 112, 113 bestimmt.

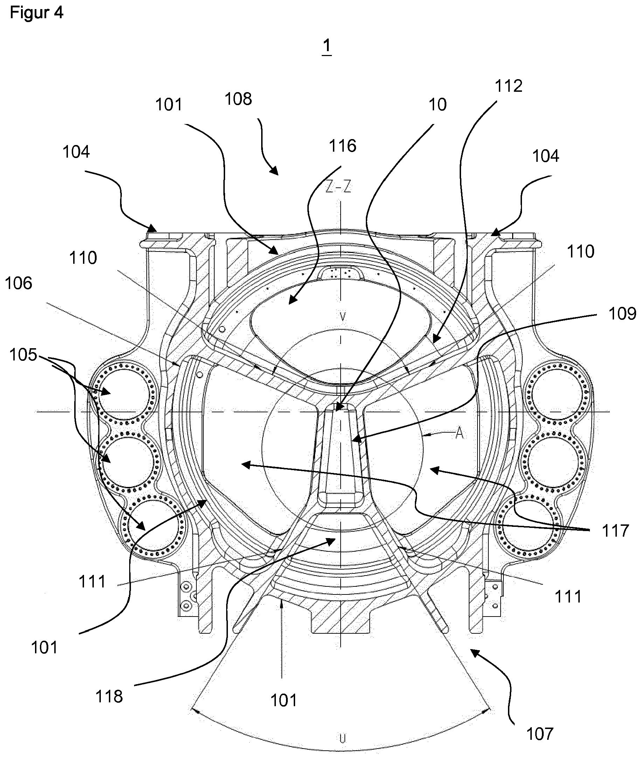

Figur 4 zeigt einen Schnitt Z-Z durch den Maschinenträger 1 aus Figur 3, welcher in Höhe des Kastenprofils 109 gezeichnet wurde. Zu sehen sind die Wandung 101, die Arme 110, 111, das im Zentrum angeordnete Kastenprofil 109 und die Öffnungen 105 für die Azimutantriebe. In Figur 4 ist deutlich erkennbar, dass die Arme 110 in den Seitenabschnitten 106 enden. Die Arme 111 enden hingegen nicht in den Seitenabschnitten 106, sondern werden an der Frontseite 107 des Maschinenträgers 1 über die Wandung 101 hinaus weitergeführt. Der Winkel V zwischen den Armen 110 an der Rückseite 108 des Maschinenträgers 1 variiert je nach Länge und Breite des Maschinenträgers 1. Der optimierte Winkel U zwischen den Armen 111 an der Frontseite 107 des Maschinenträgers 1 ist ebenfalls von der Länge und Breite des Maschinenträgers 1 und davon abhängig, wo die die Arme 111 angebunden werden, an den Flanschen 104 oder direkt an der Wandung 101 der Frontseite 107.

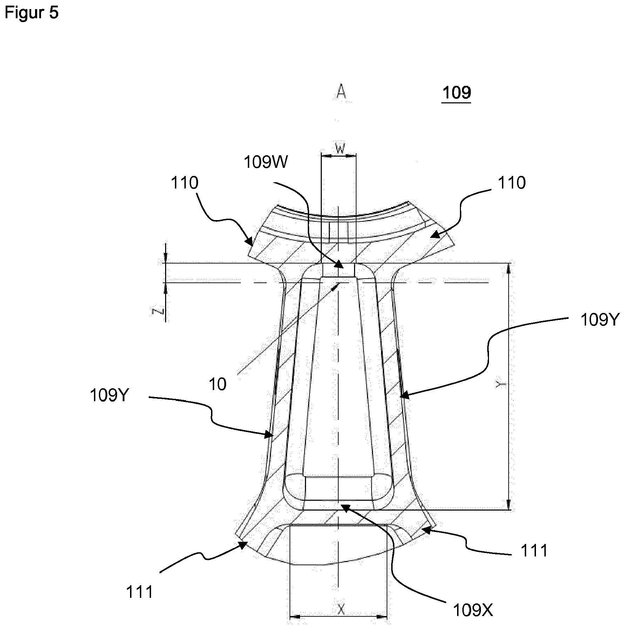

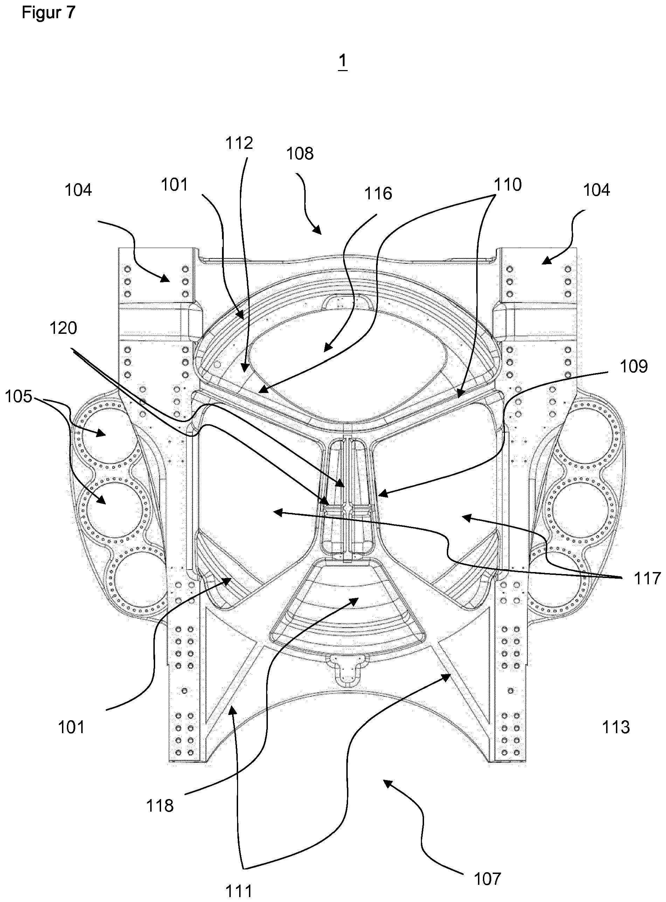

Figur 5 stellt einen Ausschnitt A von der Mitte des Maschinenträgers 1 dar und zeigt das Kastenprofil 109. Das Kastenprofil 109 kann als teilweise offene oder ganz geschlossene Konstruktion ausgeführt sein. In dem vorliegenden Ausführungsbeispiel ist das Kastenprofil 109 zur Oberseite 102 hin geöffnet und trapezförmig zur Rückseite 108 hin zulaufend ausgeführt. Das Kastenprofil 109 hat hier eine kürzere Grundseite 109W, welche zur Rückseite 108 des Maschinenträgers 1 weist, eine längere Grundseite 109X, welcher zur Frontseite 107 des Maschinenträgers 1 weist und zwei gleichlange Schenkel 109Y, welche die Grundseiten 109W und 109X miteinander verbinden. Das Zentrum 10 des Maschinenträgers 1 ist in dem vorliegenden Ausführungsbeispiel in der Nähe der kürzeren Grundseite 109W angeordnet. Die Länge (W, X, Y) der Gundseiten 109W, 109X und der Schenkel 109Y kann je nach Ausführung des Maschinenträgers 1 variieren. Das Kastenprofil 109 wird entsprechend der aufzunehmenden Lasten und der notwendigen Steifigkeit des Maschinenträgers 1 angepasst. Das Kastenprofil 109 kann aus konstruktiven oder designerischen Gründen auch andere Formen haben, beispielsweise eine dreieckige, elliptische oder runde Form. Auch kann das Kastenprofil 109 im Inneren zwischen den Schenkeln 109Y und den Grundseiten 109W, 109X weitere Unterteilungen durch quer und/oder längs stehende Wände 120 aufweisen. Dies wird beispielhaft in Figur 7 in einer weiteren Ausführung des Maschinenträgers 1 gezeigt. Beispielsweise kann der Hohlraum des Kastenprofils 109 eine Wabenstruktur aufweisen.

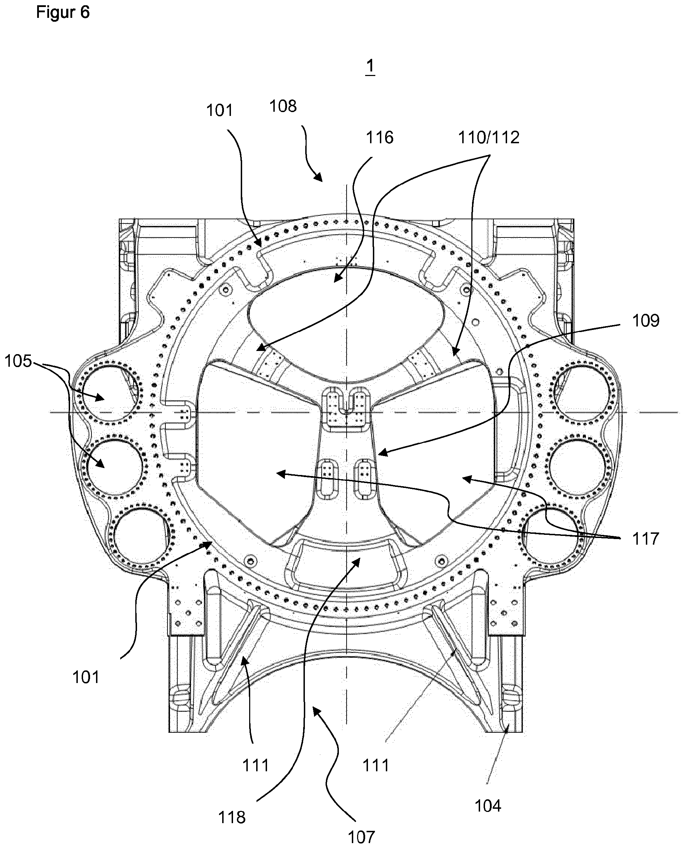

Figur 6 zeigt eine Ansicht von unten auf den erfindungsgemäßen Maschinenträger 1, wobei die kreisförmige, teilweise geschlossene Kontur der Unterseite 103 zu sehen ist. Weiterhin sind die beidseitig angeordneten runden Öffnungen 105 für die Azimutantriebe zu sehen. Das Kastenprofil 109 liegt im Zentrum 10 des Maschinenträgers 1. Die Arme 110 enden in den Seitenabschnitten 106 an der Rückseite 108. Die Arme 111 werden an der Frontseite 107 des Maschinenträgers 1 über die Wandung 101 hinaus weiter geführt. Die Unterseite 103 des Maschinenträgers 1 weist durch das Kastenprofil 109 und die Arme 110 und 111 wenigstens drei Aussparungen 116, 117 auf, wobei wenigstens zwei seitliche Aussparungen 117 nahezu identisch in Größe und Form sind. Die Aussparung 116 weist zur Rückseite 108 des Maschinenträgers 1 und wird durch das Kastenprofil 109, die beiden Arme 110 und die Wandung 101 eingeschlossen. Die zwei Aussparungen 117, welche seitlich angeordnet sind, werden durch das Kastenprofil 109, die beiden Arme 110, die beiden Arme 111 und die Seitenabschnitte 106 der Wandung 101 eingeschlossen. Zur Frontseite 107 hin, zwischen dem Kastenprofil 109, den beiden Armen 111 und der Wandung 101 kann sich eine vierte Aussparung 118 an der Unterseite 103 befinden. Ist der Winkel U zwischen den beiden Armen 111 klein und sind an den beiden Armen 111 auf der Unterseite Kragen 113 nach innen gerichtet angeformt, kann es dazu kommen, dass es keine Aussparung 118 gibt. Auch ist die Größe der Aussparungen nicht allein durch die Form und die Größe der Kragen 112, 113 an den Armen 110, 111 bestimmt, sondern auch durch die Anforderungen bezüglich der Betriebs- und Extremlasten und der Steifigkeit unter den gegebenen Platzverhältnissen.

Diese gesamte Konstruktion des Maschinenträgers 1 kann mittels Schweißen oder Gießen hergestellt werden. Im Falle des Gussverfahrens, wird das gesamte Bauteil mit der beschriebenen Wandung 101, den Armen 110, 111, dem Kastenprofil 109, den Öffnungen 105 für die Azimutantriebe und den Flanschen 104 aus einem Bauteil bestehen.

Da es sich bei dem vorhergehenden, detailliert beschriebenen Maschinenträger 1 für eine Windenergieanlage um ein Ausführungsbeispiel handelt, kann dieses in üblicher Weise vom Fachmann in einem weiten Umfang modifiziert werden, ohne den Bereich der Erfindung zu verlassen. Insbesondere können auch die konkreten Ausgestaltungen der Arme 110, 111 und des Kastenprofils 109 in anderer Form als in der hier beschriebenen folgen. Ebenso können beispielsweise die Aussparungen 116, 117, 118 auf der Unterseite 103 des Maschinenträgers 1 in einer anderen Form ausgestaltet werden, wenn dies aus Platzgründen bzw. designerischen Gründen notwendig ist. Weiter schließt die Verwendung der unbestimmten Artikel "ein" bzw. "eine" nicht aus, dass die betreffenden Merkmale auch mehrfach vorhanden sein können.

### Bezugszeichen

- RW: Rotorwelle
- RF: Rotorflansch
- V: Winkel zwischen den Ärmel 10A, 110B
- U: Winkel zwischen den Arme 111A, 111B
- W, X, Y: Länge der Grundseiten 109W, 109X und der Schenkel 109Y des Kastenprofils 109

- 1: Maschinenträger
- 10: Zentrum
- 101: Wandung
- 102: Oberseite
- 103: Unterseite
- 104: Flansche
- 105: Öffnungen für die Azimutantriebe
- 106: Seitenabschnitte
- 107: Frontseite
- 108: Rückseite
- 109: Kastenprofil
- 109W, 109X: Grundseiten
- 109Y: Schenkel
- 110: Arme
- 111: Arme
- 112: Kragen
- 113: Kragen
- 116: Aussparung
- 117: Aussparung
- 118: Aussparung
- 119: Wölbung

## Patentansprüche

1. Maschinenträger (1) für eine Windenergieanlage mit einer Oberseite (102), einer Unterseite (103), einer Frontseite (107) und einer Rückseite (108), umfassend eine umlaufende ringförmige Wandung (101) zwischen Unterseite (103) und Oberseite (102), umfassend zwei Seitenabschnitte (106) der Wandung (101), welche sich zwischen der Frontseite (107) und der Rückseite (108) des Maschinenträgers (1) erstrecken, und umfassend zwei seitliche Flansche (104) auf der Oberseite (102) des Maschinenträgers (1), wobei innerhalb der Wandung (101) mehrere Arme (110, 111) angeordnet sind,
**dadurch gekennzeichnet, dass**
die Arme (110, 111) mit der Wandung (101) über ein Kastenprofil (109) verbunden sind, und
wenigstens vier Arme (110, 111) angeordnet sind, wobei zwei Arme (110) als symmetrisches Paar an der Rückseite (108) des Maschinenträgers (1) unter einem Winkel (V) mit dem Kastenprofil (109) und der Wandung (101) verbunden sind, und zwei Arme (111) als symmetrisches Paar an der Frontseite (107) des Maschinenträgers (1) unter einem Winkel (U) mit dem Kastenprofil (109) und der Wandung (101) verbunden sind.

2. Maschinenträger (1) nach Anspruch 1 **dadurch gekennzeichnet, dass** die Arme (111) direkt an der Frontseite (107) der Wandung (101) enden oder dass die Arme (111) über die Wandung (101) hinaus verlängert sind und an den Flanschen (104) enden.

3. Maschinenträger (1) nach Anspruch 1 oder 2 **dadurch gekennzeichnet, dass** die Arme (110, 111) jeweils einen Kragen (112, 113) aufweisen, welcher nach innen, außen oder beidseitig auf der Oberseite (102) oder der Unterseite (103) an den Armen (110, 111) angeformt ist.

4. Maschinenträger (1) nach einem der vorhergehenden Ansprüche 1 bis 3
**dadurch gekennzeichnet, dass**
der Winkel (V) zwischen den beiden Armen (110) und der Winkel (U) zwischen den beiden Armen (111) in Abhängigkeit von Länge und Breite des Maschinenträgers (1) bestimmt ist.

5. Maschinenträger (1) nach einem der vorhergehenden Ansprüche 1 bis 4
**dadurch gekennzeichnet, dass**
das Kastenprofil (109) mittig zum Maschinenträger (1), bevorzugt in seinem Zentrum (10), angeordnet ist.

6. Maschinenträger (1) nach einem der vorhergehenden Ansprüche 1 bis 5
**dadurch gekennzeichnet, dass**
das Kastenprofil (109) eine rechteckige oder trapezförmige Form aufweist, wobei das Trapez zur Rückseite (108) oder zur Frontseite (107) des Maschinenträgers (1) zulaufend ausgebildet ist.

7. Maschinenträger (1) nach einem der vorhergehenden Ansprüche 1 bis 6
**dadurch gekennzeichnet, dass**
das Kastenprofil (109) als offene oder geschlossene Konstruktion ausgeführt ist und zwei gleichlange Schenkel (109Y) aufweist, welche an ihrem ersten, zur Rückseite (108) des Maschinenträgers (1) weisenden Ende mit einer Grundseite (109W) und an ihrem zweiten, zur Frontseite (107) des Maschinenträgers (1) weisenden Ende mit einer Grundseite (109X) verbunden sind, wobei die Schenkel (109Y) und die Grundseiten (109W, 109X) jeweils eine Länge (W, X, Y) aufweisen, welche an den Maschinenträger (1) bezüglich von Lastaufnahme und Steifigkeit, Breite und Länge angepasst ist.

8. Maschinenträger (1) nach Anspruch 7 **dadurch gekennzeichnet, dass**
die Grundseiten (109W, 109X) gleich lang sind oder jeweils eine der Grundseiten (109W, 109X) kürzer als die andere ist.

9. Maschinenträger (1) nach Anspruch 7 oder 8 **dadurch gekennzeichnet, dass**
das Kastenprofil (109) im Inneren zwischen den Schenkeln (109Y) und den Grundseiten (109W, 109X) weitere Unterteilungen durch quer und/oder längs stehende Wände aufweist.

10. Maschinenträger (1) nach einem der vorhergehenden Ansprüche 1 bis 9
**dadurch gekennzeichnet, dass**
die Unterseite (103) des Maschinenträgers (1) eine kreisförmige, teilweise geschlossene Kontur aufweist, welche in Richtung Oberseite (102) kugelförmig gewölbt ist.

11. Maschinenträger (1) nach einem der vorhergehenden Ansprüche 1 bis 10
**dadurch gekennzeichnet, dass**
in die Oberseite (102) der ringförmigen Wandung (101) an der Frontseite (107) und der Rückseite (108) jeweils ein elliptischer Ausschnitt eingebracht ist.

12. Maschinenträger (1) nach einem der vorhergehenden Ansprüche 1 bis 11
**dadurch gekennzeichnet, dass**
die Oberseite (102) des Maschinenträgers (1) mit einer konkaven Wölbung (119) in Längsrichtung versehen ist, wobei die Wölbung (119) das Design sowohl des Kastenprofils (109) als auch der Arme (110, 111) mit ihren angeformten Kragen (112, 113) bestimmt.

13. Maschinenträger (1) nach einem der vorhergehenden Ansprüche 1 bis 12
**dadurch gekennzeichnet, dass**
der Maschinenträger (1) mittels Schweißen oder Gießen hergestellt ist.

## Claims

1. Mainframe (1) for a wind turbine, having a top side (102), a bottom side (103), a front side (107) and a rear side (108), comprising a circumferential annular wall (101) between the bottom side (103) and the top side (102), comprising two lateral portions (106) of the wall (101) that extend between the front side (107) and the rear side (108) of the mainframe (1), and comprising two lateral flanges (104) on the top side (102) of the mainframe (1), a plurality of arms (110, 111) being arranged within the wall (101), **characterized in that** the arms (110, 111) are connected to the wall (101) via a box profile (109), and at least four arms (110, 111) are arranged, two arms (110) being connected, as a symmetrical pair, on the rear side (108) of the mainframe (1), at an angle (V) with the box profile (109) and the wall (101), and two arms (111) being connected, as a symmetrical pair, on the front side (107) of the mainframe (1), at an angle (U) with the box profile (109) and the wall (101).

2. Mainframe (1) according to Claim 1, **characterized in that** the arms (111) end directly at the front side (107) of the wall (101), or **in that** the arms (111) are extended beyond the wall (101) and end at the flanges (104).

3. Mainframe (1) according to Claim 1 or 2, **characterized in that** the arms (110, 111) each have a collar (112, 113) that is formed onto the arms (110, 111) inwardly, outwardly or on both sides, on the top side (102) or the bottom side (103).

4. Mainframe (1) according to any one of the preceding Claims 1 to 3, **characterized in that** the angle (V) between the two arms (110) and the angle (U) between the two arms (111) is determined in dependence on the length and width of the mainframe (1).

5. Mainframe (1) according to any one of the preceding Claims 1 to 4, **characterized in that** the box profile (109) is arranged in a centred manner in relation to the mainframe (1), preferably in the centre (10) thereof.

6. Mainframe (1) according to any one of the preceding Claims 1 to 5, **characterized in that** the box profile (109) has a rectangular or trapezoidal shape, the trapezium being realized such that it tapers towards the rear side (108) or towards the front side (107) of the mainframe (1).

7. Mainframe (1) according to any one of the preceding Claims 1 to 6, **characterized in that** the box profile (109) is realized as an open or closed construction, and has two limbs (109Y), of equal length, that are connected to a basic side (109W) at their first end that faces towards the rear side (108) of the mainframe (1), and to a basic side (109X) at their second end that faces towards the front side (107) of the mainframe (1), the limbs (109Y) and the basic sides (109W, 109X) each being of a length (W, X, Y) that is adapted to the mainframe (1) with respect to load bearing and stiffness, width and length.

8. Mainframe (1) according to Claim 7, **characterized in that** the basic sides (109W, 109X) are equal in length, or in each case one of the basic sides (109W, 109X) is shorter than the other.

9. Mainframe (1) according to Claim 7 or 8, **characterized in that** the box profile (109) has further interior subdivisions between the limbs (109Y) and the basic sides (109W, 109X), due to transversely and/or longitudinally extending walls.

10. Mainframe (1) according to any one of the preceding Claims 1 to 9, **characterized in that** the bottom side (103) of the mainframe (1) has a circular, partly closed, contour that is curved spherically in the direction of the top side (102).

11. Mainframe (1) according to any one of the preceding Claims 1 to 10, **characterized in that** on the front side (107) and rear side (108), respectively, there is an elliptical cutout made in the top side (102) of the annular wall (101).

12. Mainframe (1) according to any one of the preceding Claims 1 to 11, **characterized in that** the top side (102) of the mainframe (1) is provided with a concave curvature (119) in the longitudinal direction, the curvature (119) determining the design both of the box profile (109) and of the arms (110, 111), with their formed-on collars (112, 113).

13. Mainframe (1) according to any one of the preceding Claims 1 to 12, **characterized in that** the mainframe (1) is produced by means of welding or casting.

## Revendications

1. Support de machine (1) pour une éolienne, comprenant un côté supérieur (102), un côté inférieur (103), un côté avant (107) et un côté arrière (108), comportant une paroi annulaire périphérique (101) entre le côté inférieur (103) et le côté supérieur (102), comportant deux parties latérales (106) de la paroi (101), lesquelles s'étendent entre le côté avant (107) et le côté arrière (108) du support de machine (1), et comportant deux brides latérales (104) sur le côté supérieur (102) du support de machine (1), dans lequel plusieurs bras (110, 111) sont disposés à l'intérieur de la paroi (101),
**caractérisé en ce que**
les bras (110, 111) sont reliés à la paroi (101) par le biais d'un profilé en caisson (109), et
au moins quatre bras (110, 111) sont prévus, deux bras (110) étant reliés au profilé en caisson (109) et à la paroi (101) suivant un angle (V) en tant que paire symétrique au niveau du côté arrière (108) du support de machine (1), et deux bras (111) étant reliés au profilé en caisson (109) et à la paroi (101) suivant un angle (U) en tant que paire symétrique au niveau du côté avant (107) du support de machine (1).

2. Support de machine (1) selon la revendication 1, **caractérisé en ce que**
les bras (111) se terminent directement au niveau du côté avant (107) de la paroi (101) ou **en ce que** les bras (111) sont prolongés au-delà de la paroi (101) et se terminent au niveau des brides (104).

3. Support de machine (1) selon la revendication 1 ou 2, **caractérisé en ce que** les bras (110, 111) comprennent respectivement un collier (112, 113), lequel est formé sur les bras (110, 111) vers l'intérieur, vers l'extérieur ou de part et d'autre sur le côté supérieur (102) ou le côté inférieur (103).

4. Support de machine (1) selon l'une des revendications précédentes 1 à 3, **caractérisé en ce que** l'angle (V) entre les deux bras (110) et l'angle (U) entre les deux bras (111) sont déterminés en fonction de la longueur et de la largeur du support de machine (1).

5. Support de machine (1) selon l'une des revendications précédentes 1 à 4, **caractérisé en ce que** le profilé en caisson (109) est disposé centralement par rapport au support de machine (1), de préférence en son centre (10).

6. Support de machine (1) selon l'une des revendications précédentes 1 à 5, **caractérisé en ce que** le profilé en caisson (109) présente une forme rectangulaire ou trapézoïdale, le trapèze étant formé de manière effilée vers le côté arrière (108) ou vers le côté avant (107) du support de machine (1).

7. Support de machine (1) selon l'une des revendications précédentes 1 à 6, **caractérisé en ce que** le profilé en caisson (109) est réalisé comme structure ouverte ou fermée et comprend deux branches (109Y) de même longueur, lesquelles sont, à leur première extrémité tournée vers le côté arrière (108) du support de machine (1), reliées à un côté de base (109W) et, à leur deuxième extrémité tournée vers le côté avant (107) du support de machine (1), reliées à un côté de base (109X), les branches (109Y) et les côtés de base (109W, 109X) présentant respectivement une longueur (W, X, Y), laquelle est adaptée au support de machine (1) par rapport à la reprise de charge et la rigidité, la largeur et la longueur.

8. Support de machine (1) selon la revendication 7, **caractérisé en ce que**
les côtés de base (109W, 109X) sont de même longueur ou l'un des côtés de base (109W, 109X) est respectivement plus court que l'autre.

9. Support de machine (1) selon la revendication 7 ou 8, **caractérisé en ce que**
le profilé en caisson (109) comprend, à l'intérieur entre les branches (109Y) et les côtés de base (109W, 109X), d'autres subdivisions par des parois dressées transversalement et/ou longitudinalement.

10. Support de machine (1) selon l'une des revendications précédentes 1 à 9, **caractérisé en ce que** le côté inférieur (103) du support de machine (1) présente un contour circulaire, partiellement fermé, lequel est bombé de manière sphérique en direction du côté supérieur (102).

11. Support de machine (1) selon l'une des revendications précédentes 1 à 10, **caractérisé en ce qu'**une découpe elliptique est ménagée respectivement dans le côté supérieur (102) de la paroi annulaire (101) au niveau du côté avant (107) et du côté arrière (108).

12. Support de machine (1) selon l'une des revendications précédentes 1 à 11, **caractérisé en ce que** le côté supérieur (102) du support de machine (1) est doté d'une courbure concave (119) dans la direction longitudinale, la courbure (119) déterminant la conception à la fois du profilé en caisson (109) et des bras (110, 111) dotés de leurs colliers formés (112, 113).

13. Support de machine (1) selon l'une des revendications précédentes 1 à 12, **caractérisé en ce que** le support de machine (1) est fabriqué par soudage ou coulage.
